# EUROPÄISCHE PATENTSCHRIFT

(11) **EP 2 192 463 B1**
(45) Veröffentlichungstag und Bekanntmachung des Hinweises auf die Patenterteilung: **05.03.2014**
(21) Anmeldenummer: 08170170.8
(22) Anmeldetag: 28.11.2008
(51) Int. Cl.: G05B 19/402, B23Q 15/26, B23Q 17/22

(54) **Vorrichtung und Verfahren zum Positionieren eines rotationssymmetrischen Präzisionsteiles**
Device and method to position a symmetrically rotating precision part
Dispositif et procédé destinés à positionner un élément de précision à rotation symétrique

(43) Veröffentlichungstag der Anmeldung: 02.06.2010
(73) Patentinhaber: Klingelnberg AG, 8050 Zürich (CH)
(72) Erfinder: Mies, Georg, 51688 Wipperfürth (DE); Mikoleizig, Günter, 42499 Hückeswagen (DE); Welllmann, Frank, 42499 Hückeswagen (DE); Wüster, Harald, 42477 Radevormwald (DE)
(74) Vertreter: OK pat AG

(56) Entgegenhaltungen:
- EP-A2- 0 377 796
- WO-A2-02/101792
- DE-A1- 19 631 620
- DE-A1-102006 023 926
- DE-A1-102006 041 886
- JP-A- 6 039 683
- US-A- 4 218 825

## Beschreibung

Die Erfindung betrifft Vorrichtungen, wie Messvorrichtungen oder Bearbeitungsmaschinen, und Verfahren zum genauen Positionieren von Präzisionsteilen, vorzugsweise von grossen und schweren rotationssymmetrischen Präzisionsteilen.

### HINTERGRUND DER ERFINDUNG

Es gibt zahlreiche Bearbeitungsverfahren, zum Herstellen von Zahnrädern und anderen rotationssymmetrischen Präzisionsteilen. Typischerweise wird während oder nach der Bearbeitung das Präzisionsteil vermessen.

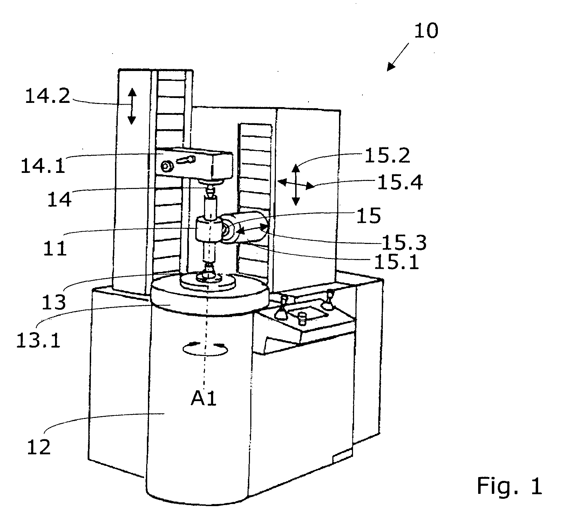

Um die Genauigkeit der Bearbeitung eines Präzisionsteils nach der Bearbeitung prüfen zu können, kann das Präzisionsteil 11 zum Beispiel aus der Bearbeitungsmaschine entnommen und in ein spezielles Messsystem 10 eingespannt werden, wo es mittels Sensoren 15 abgetastet und vermessen wird, wie in Fig. 1 angedeutet. Vorzugsweise kommen zu diesem Zweck numerisch gesteuerte Messgeräte 10 zum Einsatz. Typischerweise wird zum Vermessen ein rotationssymmetrisches Präzisionsteil 11 zwischen einer unteren Zentrierspitze 13 und einer oberen Zentrierspitze 14 eingespannt. Die untere Zentrierspitze 13 sitzt auf einem Drehtisch 13.1, der durch einen Antrieb präzise in verschiedene Winkelpositionen gefahren werden kann. Das Präzisionsteil 11 wird auf Grund seines Eigengewichts und des Anpressdrucks, der von der oberen Zentrierspitze 14 ausgeht, gegen die untere Zentrierspitze 13 gedrückt. Die Zentrierspitze 13 weist dabei eine Rotationsachse auf, die koaxial zur ersten Drehachse A1 verläuft. Vorzugsweise ist ein Arm 14.1 vorgesehen, der in der Höhe verschoben werden kann, wie durch den Doppelpfeil 14.2 angedeutet. Innerhalb des Armes 14.1 ist das obere Zentriermittel 14 so gelagert, dass es leicht um eine vertikale Achse rotieren kann, die sich mit der Rotationsachse A1 deckt. Die Messvorrichtung 10 umfasst, wie in Fig. 1 gezeigt, mindestens einen Sensor 15 zum dreidimensionalen Vermessen (3D-Tastsystem genannt) des in dem Messsystem 10 eingespannten Präzisionsteiles 11. Vorzugsweise ist ein Arm 15.1 vorgesehen, der in der Höhe verschoben werden kann, wie durch den Doppelpfeil 15.2 angedeutet. Ausserdem kann der Sensor 15 eine Zustellbewegung ausführen, wie durch die beiden zueinander senkrecht stehenden Doppelpfeile 15.3 und 15.4 angedeutet.

Die Erfahrung zeigt, dass bei grossen und schweren Präzisionsteilen ein solcher Aufbau mit einer unteren Zentrierspitze 13 und einer oberen Zentrierspitze 14 nicht geeignet ist, um das Präzisionsteil 11 vor dem Vermessen genau ausrichten zu können.

Vermehrt wird der Bedarf geäussert, Präzisionsteile mit grossem Durchmesser und grösserem Gewicht vermessen zu können. Ausserdem ist eine wichtige Anforderung an derartige Messungen, dass sie einerseits sehr genau, andererseits aber auch möglichst schnell durch geführt werden.

Solchen Anforderungen werden die herkömmlichen Messsysteme nicht gerecht. Bereits kleine Abweichungen, die sich aufgrund einer ungenauen Platzierung des Präzisionsteils in dem Messaufbau ergeben, führen zu grossen Messungenauigkeiten. Das gleiche gilt für das Platzieren von grossen Werkstücken in Bearbeitungsmaschinen. Auch hier ist das Einbringen (Einrichten) eines grossen und schweren Werkstücks oft problematisch und zeitaufwendig. Das Dokument US 4 218 825 offenbart eine Vorrichtung, die für Werkzeugmaschinen, beispielsweise eine Vertikaldrehmaschine konzipiert ist. Diese Vorrichtung erreicht eine Übereinstimmung der Rotationsachse des zylindrischen Werkstücks mit der Rotationsachse des Drehtisches durch eine nachträgliche Ausrichtung des schon auf dem Drehtisch gelegten Werkstücks. Allerdings die von US 4 218 825 vorgeschlagene Vorgehensweise, nämlich die nachträgliche Ausrichtung, bei Werkstücken mit einem Gewicht von über 100 kg nicht nur unpraktisch sondern unmöglich ist.

Es ist eine Aufgabe der Erfindung eine Vorrichtung und ein entsprechendes Verfahren bereit zu stellen, um das schnelle und zuverlässige Platzieren von grösseren und/oder schwereren Präzisionsteilen zu ermöglichen.

Mit der vorliegenden Erfindung soll insbesondere die Aufgabe gelöst werden, eine Messvorrichtung, z.B. ein numerisch gesteuertes Messgerät (CNC Messgerät), so zu verbessern, dass es für eine schnelle Komplettmessung eines grossen und/oder schweren Präzisionsteiles, zum Beispiel eines Zahnrades, geeignet ist und dass das Messgerät trotzdem einen einfachen und betriebssicheren Aufbau hat.

Mit der vorliegenden Erfindung soll insbesondere die Aufgabe gelöst werden, eine Bearbeitungsvorrichtung, z.B. eine numerisch gesteuerte Bearbeitungsmaschine (CNC Verzahnungszentrum), so zu verbessern, dass es für eine schnelle Verzahnungsbearbeitung eines grossen und/oder schweren Präzisionsteiles, zum Beispiel eines Zahnrades, geeignet ist und trotzdem einen einfachen und betriebssicheren Aufbau hat.

Die Aufgabe wird durch eine Vorrichtung gemäss Anspruch 1, und durch ein Verfahren gemäss Anspruch 10 gelöst.

Vorteilhafte Ausgestaltungen der erfindungsgemässen Vorrichtung bilden die Gegenstände der Ansprüche 2 bis 9. Vorteilhafte Ausgestaltungen des erfindungsgemässen Verfahrens bilden die Ansprüche 11 bis 13.

Gemäß Erfindung geht es um eine Vorrichtung und ein Verfahren zum Positionieren eines Präzisionsteiles auf einem Drehtisch. Die Vorrichtung umfasst mindestens zwei, vorzugsweise jedoch drei, berührungslos arbeitende Abstandsensoren, die in einer vorbekannten geometrischen Konstellation um den Drehtisch herum angeordnet sind. Die Messachsen der Abstandsensoren sind so radial in Richtung der Drehachse gerichtet, dass sich die Messachsen der Abstandsensoren in einem virtuellen Messpunkt treffen. Die Abstandsensoren sind mit einer Auswerteelektronik verbunden. Anhand der Auswerteelektronik können Ausgangssignale der Abstandsensoren verarbeitet werden, um beim Platzieren des Präzisionsteils auf dem Drehtisch eine koaxiale Einmittung des Präzisionsteils in Bezug auf die Drehachse zu ermöglichen.

Insbesondere geht es in der vorliegenden Patentanmeldung um CNC-gesteuerte Verzahnungsmessmaschinen, die zum Prüfen von Stirnradverzahnungen sowie Kegelrädern, Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung geeignet sind. Es geht hier aber auch um Bearbeitungsmaschinen.

In den hier genannten Vorrichtungen lässt sich die Erfindung besonders vorteilhaft einsetzen.

### ZEICHNUNGEN

Ausführungsbeispiele der Erfindung werden im Folgenden unter Bezugnahme auf die Zeichnungen näher beschrieben. Es zeigen:
- **FIG. 1**: ein vorbekanntes Messsystem;
- **FIG. 2**: eine perspektivische Ansicht einer ersten Messvorrichtung, gemäß Erfindung;
- **FIG. 3**: eine schematische Darstellung, die eine Möglichkeit zur Positionierung der Abstandsensoren, gemäß Erfindung, zeigt;
- **FIG. 4**: eine weitere perspektivische Teilansicht einer ersten Messvorrichtung, gemäß Erfindung;
- **FIG. 5A**: eine weitere perspektivische Teilansicht einer ersten Messvorrichtung samt eines Teils einer Zuführvorrichtung, gemäß Erfindung;
- **FIG. 5B**: eine schematische Darstellung der in Fig. 5A gezeigten Situation;
- **FIG. 5C**: eine schematische Darstellung, die eine Überlagerung der drei Vektoren aus Fig. 5B zeigt;
- **FIG. 6A**: eine weitere perspektivische Teilansicht einer ersten Messvorrichtung samt eines Teils einer Zuführvorrichtung, gemäß Erfindung;
- **FIG. 6B**: eine schematische Darstellung der in Fig. 6A gezeigten Situation;
- **FIG. 6C**: eine schematische Darstellung, die eine Überlagerung der drei Vektoren aus Fig. 6B zeigt;
- **FIG. 7**: eine schematische Darstellung, die eine Möglichkeit zur Ermittlung gewisser geometrischer Größen, gemäß Erfindung, zeigt.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

Der Begriff "koaxial" ist in der Geometrie die Bezeichnung für übereinstimmende Achsen dreidimensionaler Elemente. In diesem Sinne wird dieser Begriff auch im Zusammenhang mit der vorliegenden Erfindung verwendet.

Im Zusammenhang mit der vorliegenden Erfindung geht es um sogenannte "rotationssymmetrische Präzisionsteile". Hier sei angemerkt, dass selbstverständlich nicht zwingerndermassen das komplette Präzisionsteil rotationssymmetrisch ausgeführt sein muss, um unter den Begriff "rotationssymmetrisches Präzisionsteil" zu fallen. Bei einem Stirnrad, zum Beispiel, ist die Verzahnung konzentrisch um die Rotationsachse des Stirnrads angeordnet, aber die Lage und Form der einzelnen Zähne ist nicht rotationssymmetrisch zu der Rotationsachse. Trotzdem haben solche Zahnräder, wie auch andere Präzisionsteile, häufig mindestens eine rotationssymmetrische Fläche. Hierbei kann es sich zum Beispiel um eine Aussenfläche einer koaxialen Welle, eines Schafts oder um eine Innenfläche handeln, die durch Bohren, Drehen, Schleifen oder Fräsen entstanden sind. Im Sinne der vorliegenden Erfindung werden hier alle Präzisionsteile als rotationssymmetrische Präzisionsteile bezeichnet, die mindestens eine rotationssymmetrische Fläche aufweisen.

Hier geht es insbesondere um grosse und/oder schwere rotationssymmetrische Präzisionsteile. Solche Präzisionsteile haben zum Beispiel einen Durchmesser, der deutlich grösser ist als 1 m. Das Gewicht beträgt mindestens 100 kg, kann aber auch bis zu 30 Tonnen betragen. Es kann sich zum Beispiel um großmodulige Kegelräder handeln, mit bis zu 6 m Außendurchmesser.

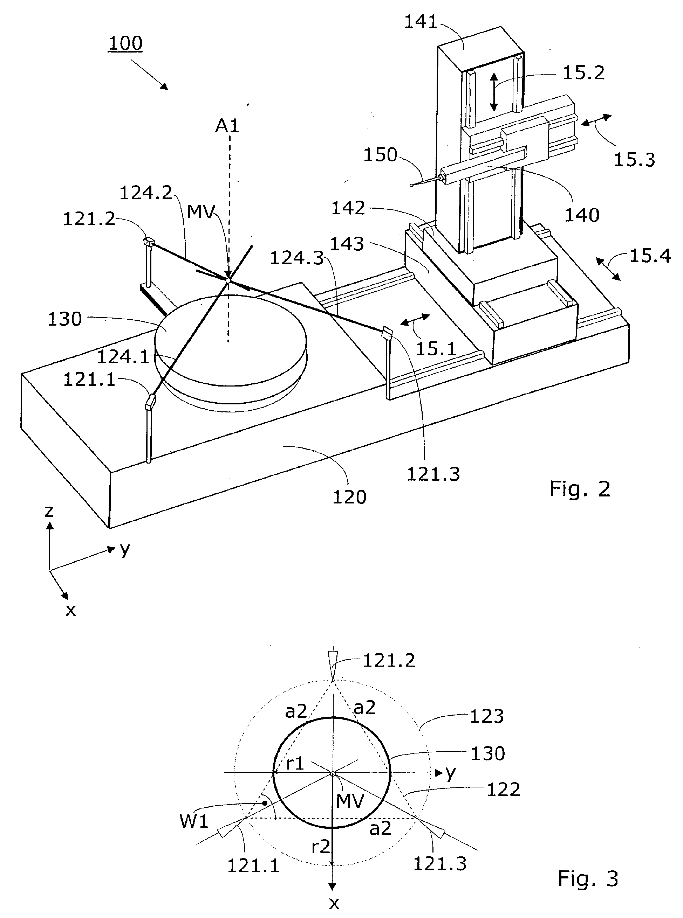

In einer vorteilhaften Ausführungsform der Erfindung, die in Fig. 2 gezeigt ist, geht es um ein vollautomatisches, CNC-gesteuertes Verzahnungsmesszentrum 100, das hier allgemeiner auch als Vorrichtung 100 oder als Messvorrichtung 100 bezeichnet wird. Die Vorrichtung 100 ist zum Prüfen von grossen und/oder schweren Stirnradverzahnungen sowie Kegelrädern, Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung geeignet, um nur einige Einsatzmöglichkeiten aufzuzählen.

Die Vorrichtung 100 umfasst einen über eine Ansteuerung (nicht sichtbar) antreibbaren Drehtisch 130. Der Drehtisch 130 befindet sich im sogenannten Messbereich oder Messraum der Messvorrichtung 100. Dieser Messbereich zeichnet sich dadurch aus, dass er durch den Messkopf (z.B. einen Messtaster 150) erreichbar ist. Der Drehtisch 130 weist eine Drehachse auf, die hier als zentrale, vertikale Drehachse A1 bezeichnet wird. Der Drehtisch 130 ist so auf einem Maschinenbett 120 oder Unterbau angeordnet, dass ein zu vermessendes Präzisionsteil 11 koaxial (d.h. die Rotationsachse A2 des Präzisionsteils 11 fällt mit der Drehachse A1 des Drehtischs 130 zusammen) auf dem Drehtisch 130 platzierbar ist.

Vorzugsweise ist ein Messturm 141 mit einem Arm 140 vorgesehen, der in der Höhe verschoben werden kann, wie durch den Doppelpfeil 15.2 angedeutet. Ausserdem kann der Arm 140 ausgefahren und eingezogen werden, wie durch den Doppelpfeil 15.3 angedeutet. Der Messturm 141 kann auf einem Lateralschlitten 142 sitzen, der nach vorne und hinten verschiebbar ist, wie durch den Doppelpfeil 15.4 angedeutet. Dieser Lateralschlitten 142 kann wiederum auf einem zweiten Lateralschlitten 143 (auch als Zustellschlitten bezeichnet) angeordnet sein, der entlang des Maschinenbetts 120 lateral verschiebbar ist, wie durch den Doppelpfeil 15.1 angedeutet.

Die Messvorrichtung 100 umfasst, wie in Fig. 2 gezeigt, mindestens einen Sensor 150 zum dreidimensionalen Vermessen (3D-Tastsystem) des in der Messvorrichtung 100 platzierten Präzisionsteiles. Vorzugsweise sitzt der Sensor 150 an dem Arm 140. Der Sensor 150 kann verschiedene Zustellbewegungen ausführen, wie durch die Doppelpfeile 15.1 - 15.4 angedeutet. Der Sensor 150 ist extrem empfindlich und es ist beim schnellen Vermessen wichtig, dass der Sensor 150 beim Zustellen und/oder beim Messen oder beim Drehen des Präzisionsteils um die Vertikalachse A1 nicht mit dem Präzisionsteil kollidiert.

Der Aufwand ein grosses und/oder schweres Präzisionsteil auf dem Drehtisch 130 im Messbereich sehr genau zu platzieren ist enorm gross. Es dauert teilweise bis zu einer Stunde, um ein grosses und schweres Präzisionsteil genau auf dem Drehtisch 130 zu platzieren. Mit den üblichen Mitnehmern und Zentriermitteln (siehe Fig. 1) zu arbeiten ist hier nicht oder nur bedingt möglich.

Gemäss Erfindung wurde ein anderer Weg beschritten, um ein schnelles und trotzdem genaues Platzieren zu ermöglichen, wie im Folgenden näher erläutert wird.

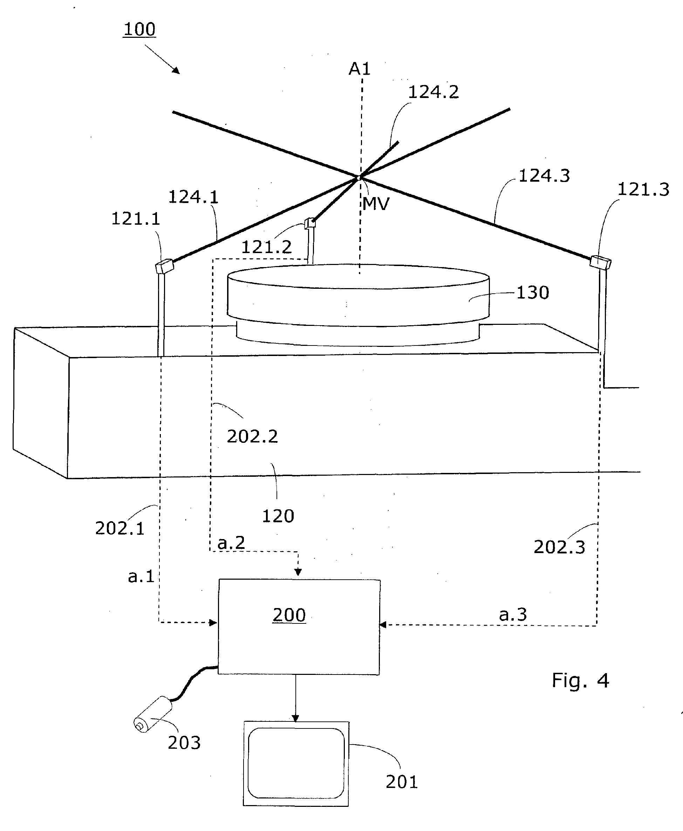

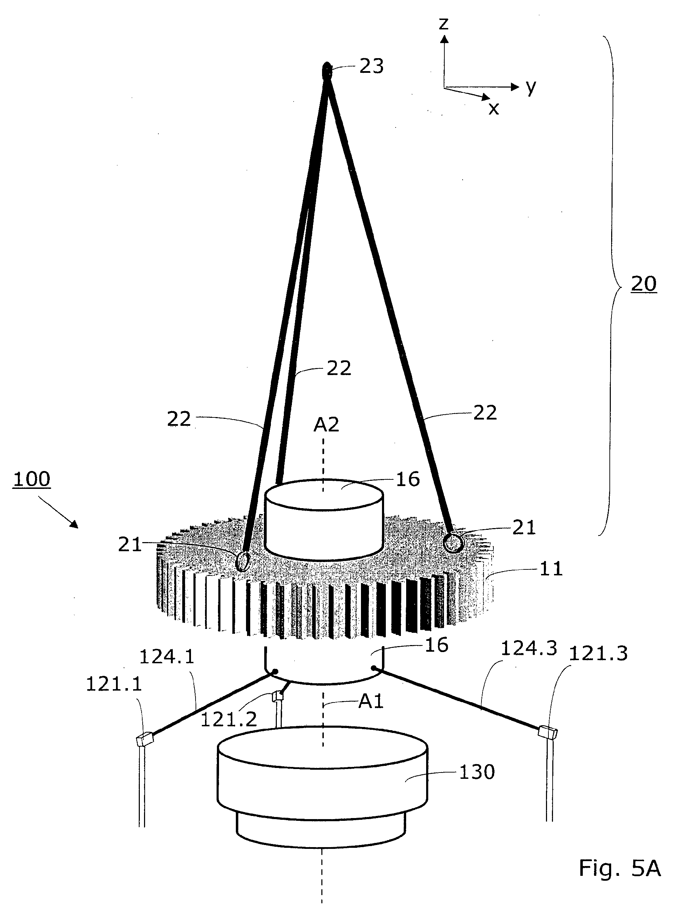

In einer ersten vorteilhaften Ausführungsform ist die Messvorrichtung 100 mit einer Auswerteelektronik 200 (siehe Fig. 4) und mit drei berührungslos arbeitenden Abstandsensoren 121.1, 121.2 und 121.3 ausgestattet. Diese Abstandsensoren 121.1, 121.2 und 121.3 sind in einer vorbekannten geometrischen Konstellation um den Messbereich herum angeordnet. Vorzugsweise ist diese Konstellation so gewählt, dass die Abstandsensoren 121.1, 121.2 und 121.3 in äquidistanten gegenseitigen Abständen a2 um den Messbereich herum angeordnet sind, wie in Fig. 3 angedeutet. Fig. 3 zeigt eine Draufsicht des Drehtischs 130 und der Abstandsensoren 121.1, 121.2, 121.3 in einem x-y-Koordinatensystem (es handelt sich vorzugsweise um dasselbe Koordinatensystem wie in Fig. 2 und Fig. 5A). Die drei Schenkel mit der Länge a2 bilden bei diesem Ausführungsbeispiel ein gleichschenkliges Dreieck 122. Die drei Schenkel mit der Länge a2 bilden Sekanten in einem Hilfskreis 123. Dieser Hilfskreis 123 hat einen Radius r2, der dem Abstand der Abstandsensoren 121.1, 121.2 und 121.3 von der Drehachse A1 entspricht. Der gegenseitige Winkel W1 zwischen den Abstandsensoren 121.1, 121.2 und 121.3 beträgt hier 60 Grad.

In Fig. 3 sind die Abstandsensoren 121.1, 121.2 und 121.3 in der Draufsicht durch drei kleine spitzwinklige Dreiecke angedeutet, um deren "Blickrichtung" verdeutlichen zu können. Der Drehtisch 130 hat vorzugsweise eine Tellerform, wobei der Radius des Tellers mit r1 bezeichnet ist. Gemäss Erfindung gilt folgendes Verhältnis: r2 beträgt vorzugsweise zwischen ca. 200% und ca. 300% von r1. Bei einem Drehtisch 130 mit einem Radius r1 von 0,8 m, beträgt der bevorzugte Radius r2 somit zwischen ca. 1,60 m und ca. 2,4 m.

Gemäß Erfindung sind die Messachsen 124.1, 124.2, 124.3 der drei Abstandsensoren 121.1, 121.2 und 121.3 so radial in Richtung der zentralen Drehachse A1 gerichtet, dass sich alle drei Messachsen 124.1, 124.2, 124.3 in einem einzigen virtuellen Messpunkt MV treffen, der auf der Drehachse A1 liegt. In den Figuren ist dieser virtuelle Messpunkt MV jeweils durch einen kleinen Kreis gekennzeichnet. Ein analoger Ansatz gilt auch wenn nur zwei Abstandsensoren eingesetzt werden.

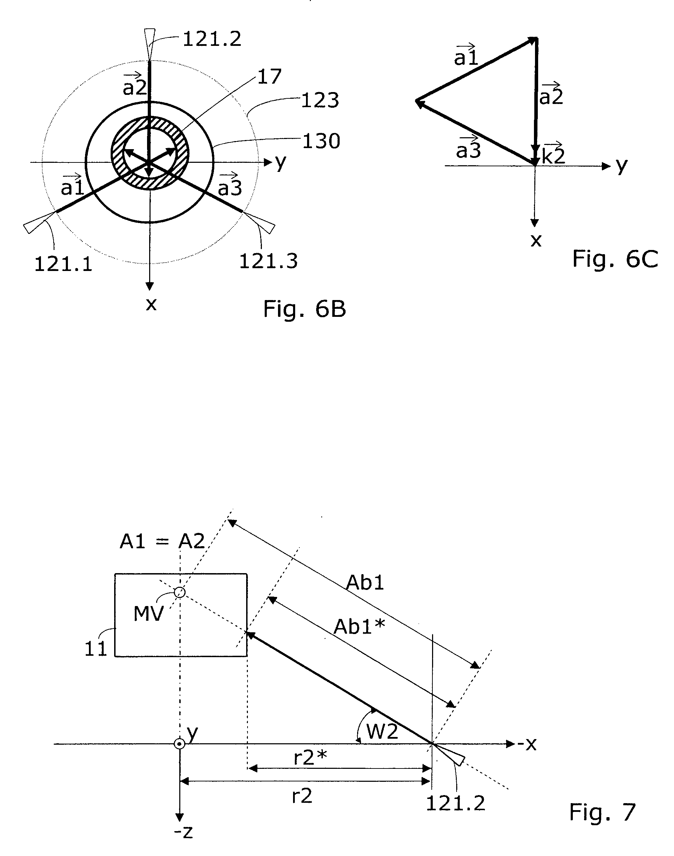

Der Neigungswinkel W2 (siehe Fig. 7) der Abstandsensoren 121.1, 121.2 und 121.3 beträgt vorzugsweise zwischen 2 und 30 Grad. Besonders bewährt haben sich Neigungswinkel W2 zwischen 5 und 15 Grad. Generell gilt hier die Regel, dass die drei Messachsen 124.1, 124.2, 124.3 (oder die zwei Messachsen, wenn nur zwei Abstandsensoren eingesetzt werden) der Abstandsensoren 121.1, 121.2 und 121.3 einen virtuellen Tastkegel bilden, dessen Tastspitze im virtuellen Punkt MV liegt. Der Kopfwinkel dieses Tastkegels wird immer spitzer, wenn die Neigungswinkel W2 grösser werden. Umso tiefer kann der virtuelle Tastkegel von unten z.B. in das Innere einer Bohrung eindringen, um dort an einer Rotationsfläche Messpunkte abzutasten. Das erhöht zwar die Flexibilität der Einsetzbarkeit der Vorrichtung 100, führt aber zu ungenaueren Messungen. Die angegebenen Winkelbereiche für W2 wurden festgelegt, wie oben angegeben, um einen guten Kompromiss zu finden, der es erlaubt möglichst alle gängigen Präzisionsteile abzutasten und trotzdem eine ausreichende Genauigkeit zu gewährleisten.

Vorzugsweise haben die Abstandsensoren 121.1, 121.2 und 121.3 alle einen identischen Radialabstand r2 zu der Drehachse A1, um eine einfache Auswertung der Ausgangssignale a.1, a.2, a.3 der Abstandsensoren 121.1, 121.2 und 121.3 zu ermöglichen. Es ist aber auch möglich die Abstandsensoren 121.1, 121.2 und 121.3 in unterschiedlichen Abständen zur Drehachse A1 anzuordnen. Wenn diese drei Abstände bekannt sind, so kann man anhand einfacher geometrischer und trigonometrischer Betrachtungen die Ausgangssignale a.1, a.2, a.3 der Abstandsensoren 121.1, 121.2 und 121.3 miteinander in Bezug setzen, um eine Aussage über die Exzentrizität (als Maß für die Abweichung von der idealen koaxialen Einmittung) eines Präzisionsteils 11 treffen zu können.

Vorzugsweise haben die Abstandsensoren 121.1, 121.2 und 121.3 alle einen identischen Winkelabstand von 120 Grad zueinander, um eine einfache Auswertung der Ausgangssignale a.1, a.2, a.3 der Abstandsensoren 121.1, 121.2 und 121.3 zu ermöglichen. Es ist aber auch möglich, die Abstandsensoren 121.1, 121.2 und 121.3 in unterschiedlichen Winkelabständen zueinander anzuordnen. Wenn diese drei Winkelabstände bekannt sind, so kann man anhand einfacher geometrischer und trigonometrischer Betrachtungen die Ausgangssignale a.1, a.2, a.3 der Abstandsensoren 121.1, 121.2 und 121.3 miteinander in Bezug setzen, um eine Aussage über die Exzentrizität (als Maß für die Abweichung von der idealen koaxialen Einmittung) eines Präzisionsteils 11 treffen zu können.

Gemäss Erfindung ist es also wichtig, dass die geometrisch Konstellation der Abstandssensoren (zwei oder drei an der Zahl) vorbekannt ist, um so mittels geometrischer und trigonometrischer Betrachtungen die Ausgangssignale der Abstandsensoren miteinander in Bezug setzen zu können, um eine Aussage über die Exzentrizität (als Maß für die Abweichung von der idealen koaxialen Einmittung) eines Präzisionsteils 11 treffen zu können.

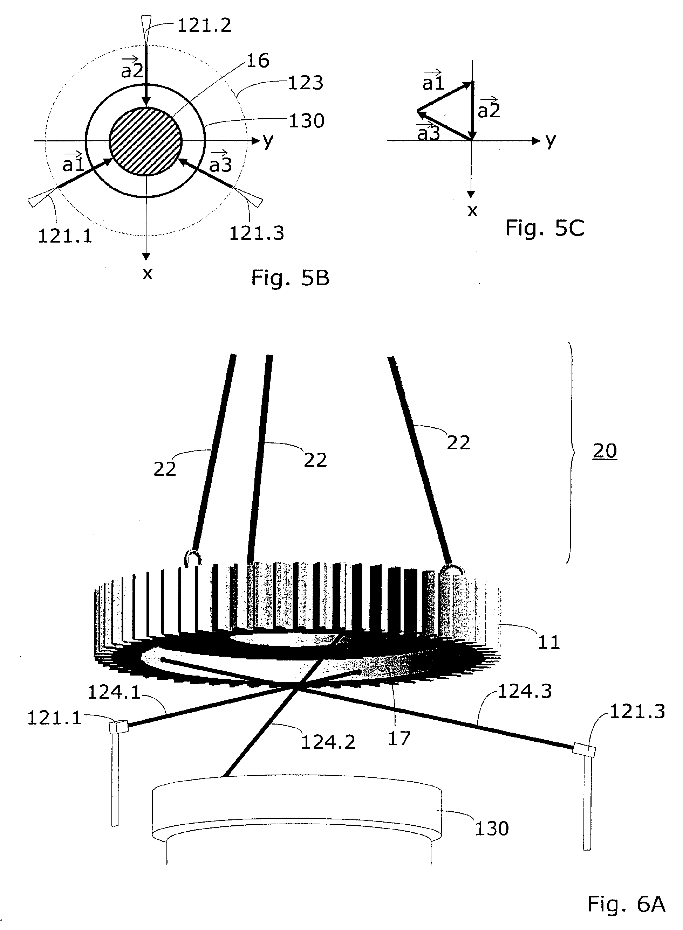

Gemäß Erfindung sind die Ausgangssignale a.1, a.2, a.3 der zwei oder drei Abstandsensoren 121.1, 121.2 und 121.3 mittels der Auswerteelektronik 200 verarbeitbar, um beim Platzieren des Präzisionsteils 11 im Messbereich die koaxiale Ausmittung des Präzisionsteils 11 in Bezug auf die Drehachse A1 zu ermöglichen, wie in den Figuren 5 und 6 anhand von zwei verschiedenen Präzisionsteilen 11 illustriert.

Besonders bevorzugt sind Abstandsensoren 121.1, 121.2, 121.3, die optisch arbeiten. Diese optischen Sensoren 121.1, 121.2, 121.3 erzielen eine ausreichend hohe Genauigkeit und sind besonders einfach und intuitiv in der Handhabung. Ganz besonders bevorzugt sind Lasersensoren 121.1, 121.2, 121.3, die mittels Laufzeitmessung den Abstand zu dem Präzisionsteil 11 messen. Diese Abstandsensoren 121.1, 121.2, 121.3 richten Laserlicht entlang der Messachsen 124.1, 124.2, 124.3 auf eine rotationssymmetrische Oberfläche 16 oder 17 des Präzisionsteils 11. Hierbei macht sich die Erfindung zu nutze, dass selbst Zahnräder, Schnecken, Rotoren und dergleichen typischerweise rotationssymmetrische Flächen aufweisen, die optisch abtastbar sind, wenn das Präzisionsteil 11 mit einer Zuführvorrichtung 20 von oben her auf dem Drehtisch 130 platziert wird.

Ganz besonders bevorzugt sind Lasersensoren 121.1, 121.2, 121.3, die Licht im sichtbaren Wellenlängenbereich aussenden. Das hat den Vorteil, dass die Lichtpunkte auf dem Präzisionsteil 11 für den Bediener sichtbar sind. Damit wird die Handhabbarkeit intuitiver und schneller.

In Fig. 5A ist eine Situation gezeigt, bei der ein außenverzahntes Zylinderrad 11 mit einer zylindrischen Welle 16 auf dem Drehtisch 130 platziert wird. Die Lichtstrahlen (die entlang der Messachsen 124.1, 124.2, 124.3 verlaufen) der optischen Abstandsensoren 121.1, 121.2, 121.3 (vorzugsweise Lasersensoren 121.1, 121.2, 121.3) treffen auf die zylindrische Umfangsfläche der Welle 16 und werden jeweils zurück reflektiert, was eine Laufzeitmessung in jedem der Abstandsensoren 121.1, 121.2, 121.3 ermöglicht. Im gezeigten Beispiel ist eine Position erreicht, wo die Rotationsachse A2 des Zylinderrads 11 genau mit der Drehachse A1 des Drehtischs 130 zusammenfällt (koaxiale Einmittung genannt). In diesem Fall liefern die drei Abstandsensoren 121.1, 121.2, 121.3 je das gleiche Ausgangssignal (das repräsentativ ist für den gemessenen Abstand zur Welle 16), d.h. es gilt a.1 = a.2 = a.3, und die Auswerteelektronik 200 gibt ein Signal (z.B. ein akustisches Signal) oder zeigt auf einem Bildschirm 201 eine entsprechende grafische Darstellung, um den Bediener der Zuführvorrichtung 20 darüber zu informieren, dass das Zylinderrad 11 nur noch parallel zur z-Achse abgesenkt und auf dem Drehtisch 130 abgesetzt werden muss.

Das Prinzip zur Ermittlung der momentanen Exzentrizität, respektive zur Güte der koaxialen Einmittung wird nun anhand der Figuren 5B und 5C erläutert. Diese Figuren stehen in Bezug zur Fig. 5A. In beiden Figuren ist eine Projektion in die x-y-Ebene gezeigt. In Fig. 5B ist ein Schnitt durch die rotationssymmetrische Welle 16 zu erkennen. Die Lichtstrahlen der Abstandsensoren 121.1, 121.2, 121.3 sind durch sogenannte Abstandsvektoren *a̅*1*, a̅*2*, a̅*3 dargestellt. Wenn man davon ausgeht, dass die zylinderförmige Welle 16 näherungsweise parallel zur Drehachse A1 und somit auch zur z-Achse hängt, kann man mit einer Projektion der Vektoren in die x-y-Ebene arbeiten. In Fig. 5C ist dargestellt, dass man die drei Vektoren in den Koordinatenursprung verschieben und alle drei Vektoren hintereinander anordnen kann. Im gezeigten Beispiel heben sich die Vektoren zu Null auf, was bedeutet, dass die zylinderförmige Welle 16 ideal koaxial eingemittet ist. Wenn man nicht mit einer Projektion der Vektoren in die x-y-Ebene arbeitet, würde die 3-dimensionale Überlagerung der drei Vektoren sich auch zu Null aufheben.

In Fig. 6A ist eine Situation gezeigt, bei der ein außenverzahntes Zylinderrad 11 mit zentraler Bohrung 17 auf dem Drehtisch 130 platziert wird. Die Lichtstrahlen der optischen Abstandsensoren 121.1, 121.2, 121.3 (vorzugsweise Lasersensoren 121.1, 121.2, 121.3) treffen auf die zylindrische Innenfläche der Bohrung 17 und werden jeweils zurück reflektiert, was eine Laufzeitmessung in jedem der Abstandsensoren 121.1, 121.2, 121.3 ermöglicht. Auch in diesem Fall liefern die drei Abstandsensoren 121.1, 121.2, 121.3 Ausgangssignale a.1, a.2, a.3 (die repräsentativ sind für die jeweils gemessenen Abstände zur Innenfläche der Bohrung 17) und die Auswerteelektronik 200 gibt ein Signal (z.B. ein akustisches Signal) oder zeigt auf einem Bildschirm 201 eine entsprechende grafische Darstellung, um den Bediener der Zuführvorrichtung 20 darüber zu informieren, ob und in welche Richtung das Zylinderrad 11 noch verschoben werden muss, bevor es parallel zur z-Achse abgesenkt und auf dem Drehtisch 130 abgesetzt werden kann.

Das Prinzip zur Ermittlung der momentanen Exzentrizität, respektive zur Güte der koaxialen Einmittung wird nun anhand der Figuren 6B und 6C erläutert. Diese Figuren stehen in Bezug zur Fig. 6A. In beiden Figuren ist eine Projektion in die x-y-Ebene gezeigt. In Fig. 6A ist ein Schnitt durch die Bohrung mit der rotationssymmetrischen Fläche 17 zu erkennen. Die Lichtstrahlen der Abstandsensoren 121.1, 121.2, 121.3 sind durch sogenannte Abstandsvektoren *a̅*1*, a̅*2*, a̅*3 dargestellt. Wenn man davon ausgeht, dass das Präzisionsteil 11 und somit auch die zylindrische Fläche 17 parallel zur Drehachse A1 und somit auch zur z-Achse hängt, kann man mit einer Projektion der Vektoren in die x-y-Ebene arbeiten. In Fig. 6C ist dargestellt, dass man die drei Vektoren in den Koordinatenursprung verschieben und alle drei Vektoren hintereinander anordnen kann. Im gezeigten Beispiel heben sich die Vektoren jedoch nicht zu Null auf, was bedeutet, dass die zylindrische Fläche 17 im Moment nicht koaxial eingemittet ist. Aus Fig. 6B ist ersichtlich, dass die zylindrische Fläche 17 zwar in Bezug auf die Abstandssensoren 121.1 und 121.3 ideal eingemittet ist (d.h. die Vektoren *a̅*1, *a̅*3 haben die gleiche Länge), aber die Fläche 17 ist parallel zur x-Achse in negativer x-Richtung etwas verschoben. Das Maß für diese Exzentrizität ist in Fig. 6C durch den Korrekturvektor *k̅*2 dargestellt. Wenn man das Präzisionsteil 11 in x-Richtung durch geeignete Bewegung der Zuführvorrichtung 20 um den Korrekturvektor *k̅*2 verlagert, dann ist die koaxiale Einmittung erreicht.

Auch hier kann man analog mit einer 3-dimensionalen Überlagerung der drei Vektoren arbeiten.

Bevorzugt ist eine Vorrichtung 100 bei der der Radialabstand r2 aller Abstandsensoren 121.1, 121.2, 121.3 zu der Drehachse A1 identisch ist und die Abstandsensoren 121.1, 121.2, 121.3 somit in einem gleichschenkligen Dreieck 122 angeordnet sind (siehe Fig. 3). In diesem Fall liefern nämlich alle drei Sensoren 121.1, 121.2, 121.3 die gleichen Signale (d.h. es gilt stets a.1 = a.2 = a.3 und auch *a̅*1 = *a̅*2 = *a̅*3)*,* wenn die rotationssymmetrische Fläche, die berührungslos abgetastet wird, koaxial eingemittet ist in Bezug auf die Drehachse A1.

Da man häufig die genaue geometrisch Form und Lage der abzutastenden rotationssymmetrischen Fläche nicht kennt, oder die Parameter dieser Fläche nicht in der Vorrichtung 100 vorliegen hat, ist man am flexibelsten, wenn die drei Abstandsensoren 121.1, 121.2, 121.3 in einer gleichmässigen, vorbekannten geometrischen Konstellation so angeordnet sind, wie in Fig. 3 gezeigt. Eine andere Art der Anordnung erfordert gegebenenfalls aufwendige geometrisch Umrechnungen und das rechnerische zueinander in Bezugsetzen von verschiedenen Koordinatensystemen.

Vorzugsweise sind die gegenseitigen Abstände a2 gleich (äquidistante Anordnung der Abstandsensoren 121.1, 121.2, 121.3 genannt) und man kennt den radialen Abstand r2 der drei Abstandsensoren 121.1, 121.2, 121.3. Wenn zusätzlich der Neigungswinkel W2 bekannt ist, wie in Fig. 7 gezeigt, dann kann man z.B. anhand trigonometrischer Formeln oder mittels des Strahlensatzes die genauen geometrischen Verhältnisse rechnerisch ermitteln. Falls die Abstandsensoren 121.1, 121.2, 121.3 absolute Werte (z.B. Ab1*, wobei AB1* die Länge des entsprechenden Abstandsvektors *a̅*1 ist) für den jeweiligen Abstand ausgeben, so kann man die Abstandsinformation der drei Abstandsensoren 121.1, 121.2, 121.3 zueinander in Bezug setzen, um aus den Abstandsinformationen zum Beispiel die Abweichung in einem x-y-Koordinatensystem (siehe Fig. 3 und Fig. 7) auszudrücken. Derselbe Ansatz funktioniert aber auch bei Abstandsensoren 121.1, 121.2, 121.3, die relative Abstandsinformation ausgeben, wenn ein gemeinsamer Bezugspunkt (z.B. der Punkt MV) vorhanden ist, auf den sich die relative Abstandsinformation bezieht.

Anhand von Fig. 7 kann man erkennen, dass sich zum Beispiel aus dem absolut gemessenen Abstand Ab1* der radiale Abstand r2* in der x-y-Ebene errechnen lässt, da man den Winkel W2 in der x-z-Ebene kennt. Hier kann zum Beispiel die Formel cos(W2) = r2*/Ab1* verwendet werden. In der gezeigten Darstellung ist das Präzisionsteil 11 durch einen Zylinder dargestellt, der koaxial eingemittet ist, d.h. es gilt A1 = A2. Wenn alle Abstandsensoren 121.1, 121.2, 121.3 ein identisches Ab1* oder ein identisches r2* liefern (d.h. wenn a.1 = a.2 = a.3 und auch *a̅*1 = *a̅*2 = *a̅*3*),* dann ist das Präzisionsteil 11 ideal eingemittet.

Dadurch, dass der Abstandsensor 121.2 in Fig. 3, Fig. 5B, Fig. 6B und Fig. 7 genau auf der x-Achse liegt, hat dieser Abstandsensor 121.2 keinen Einfluss auf den Abstand auf der y-Achse, da die y-Achse senkrecht steht zur x-Achse. Abstandswerte, die von den Abstandsensoren 121.1 und 121.3 ermittelt werden, haben dagegen je einen Beitrag in x-Richtung und y-Richtung. Das liegt daran, dass die Abstandsvektoren *a̅*1 *und a̅*2 in x-Koordinatenanteile und z-Koordinatenanteile zerlegt werden können.

Als Abstandsensoren 121.1, 121.2, 121.3 kommen vorzugsweise optische Abstandssensoren zum Einsatz, wo Sender und Empfänger in einem Gehäuse untergebracht sind. Vorzugsweise arbeiten diese Abstandsensoren 121.1, 121.2, 121.3 nach dem Prinzip der Lichtlaufzeitmessung.

Solche Abstandssensoren 121.1, 121.2, 121.3 können je einen analogen Ausgang 202.1, 202.2, 202.3 haben, der zum Beispiel Ausgangssignale a.1, a.2, a.3 im Bereich zwischen 0 bis 10 V DC liefert. Vorzugsweise sind die Abstandssensoren 121.1, 121.2, 121.3 so ausgeführt, dass sie je ein lineares Ausgangssignal a.1, a.2, a.3 proportional zur Entfernung liefern. Falls analoge Ausgangssignale a.1, a.2, a.3 zu verarbeiten sind, umfasst die Auswerteelektronik 200 einen analogen Schaltungsteil.

Es können aber auch Abstandssensoren 121.1, 121.2, 121.3 eingesetzt werden, die digitale Ausgangssignale a.1, a.2, a.3 liefern. Falls digitale Ausgangssignale a.1, a.2, a.3 zu verarbeiten sind, umfasst die Auswerteelektronik 200 einen entsprechenden digitalen Schaltungsteil.

Besonders bevorzugt sind Abstandssensoren mit digitalem Ausgangssignal, die ein absolutes Abstandssignal über eine serielle Schnittstelle liefern.

Es sei hier angemerkt, dass die Auswerteelektronik 200 so ausgelegt sein kann, dass sie direkt einen Bildschirm 201 ansteuert. Die Auswerteelektronik 200 kann aber auch so ausgelegt sein, dass sie Signale an einen Rechner liefert, der die Darstellung auf einem Bildschirm 201 übernimmt.

In einer weiteren Ausführungsform umfassen die Abstandssensoren 121.1, 121.2, 121.3 Lichtleiter (z.B. Glasfaserlichtleiter) und/oder optische Elemente (wie Linsen oder Spiegel), um Laserlicht entlang der Messachsen 124.1, 124.2, 124.3 in Richtung des Präzisionsteils 11 zu schicken. Durch den Einsatz solcher Lichtleiter und/oder optische Elemente kann die Elektronik der Abstandssensoren 121.1, 121.2, 121.3 an einem anderen Ort platziert werden. Dadurch kommt es zu weniger Störungen und Beschädigungen. Durch diese Maßnahme ist auch eine Konstellation möglich, wo nur eine Laserquelle zum Einsatz kommt, die aber Licht über verschiedene Wege zu dem Präzisionsteil schickt.

Gemäß Erfindung kommt als Zuführvorrichtung 20 vorzugsweise ein Hebezeug in Form eines Krans, vorzugsweise ein Decken- oder Hallenkran, zum Einsatz. Mit einem solchen Kran 20 kann das Präzisionsteil 11 in einem 1. Schritt von oben her schwebend über dem Drehtisch 130 gehalten werden. Das Präzisionsteil 11 ist zu diesem Zweck an mindestens drei Punkten mit dem Kran 20 verbunden, wobei der Kran 20 durch Bedienpersonal fernbedienbar ist. Das Präzisionsteil 11 kann aber auch nur an einem zentralen Punkt aufgehängt sein. In den Figuren 5 und 6 ist gezeigt, dass das Präzisionsteil 11 mit drei Ösen 21 oder dergleichen versehen sein kann, um an diesen Ösen 21 Seile oder Ketten 22 zu befestigen. Die drei Seile oder Ketten 22 können oben in einem Aufhängungspunkt 23 zusammengeführt sein, um an diesem Aufhängungspunkt 23 ein einzelnes Hubseil oder eine einzelne Hubkette zu befestigen, die aufwärts führt und zum Beispiel um eine Seil- oder Kettenrolle des Krans 20 läuft. Neben dem Aufhängungspunkt ist ein Koordinatensystem gezeigt, um anzudeuten, dass der Kran 20 vorzugsweise in 3 Achsrichtungen bewegbar ist. Vorzugsweise ist der Radius der drei Befestigungspunkte für die Seile 22 zur Werkstückachse gleich. In diesem Fall muss die Länge der Seile 22 untereinander ebenfalls gleich sein. Wenn diese Vorraussetzung nicht erfüllt ist, ist die Werkstückachse nicht parallel zu A1. Es gibt auch zentrale Befestigungspunkte mit nur einem Seil. Die Erfindung lässt sich auch in diesem Fall anwenden.

Die Vorrichtung 100 umfasst vorzugsweise ein Bildschirm 201, auf dem ein schematisches Zielführungssystem, vorzugsweise in Form eines Fadenkreuzes, dargestellt ist. Die Darstellung auf dem Bildschirm 201 kann direkt (z.B. durch direkte Ansteuerung seitens der Auswerteelektronik 200) oder indirekt (z.B. mittels eines zwischengeschalteten Rechners) anhand der Ausgangssignale a.1, a.2, a.3 der drei Abstandsensoren 121.1, 121.2, 121.3 erfolgen.

Auf dem Bildschirm 200 wird vorzugsweise eine Grafik dargstellt, die einerseits den Mittelpunkt des Drehtischs (Drehachse A1) und andererseits die Istposition der Rotationsachse A2 des Präzisionsteils zeigt. Diese Istposition wird anhand der Ausgangssignale a.1, a.2, a.3 ermittelt und jeweils sofort auf dem Bildschirm angezeigt. Vorzugsweise werden in dieser Grafik auch die Richtungen angezeigt, damit ein Bediener der Vorrichtung 100 problemlos erkennen kann, in welche Richtung er den Kran steuern muss, um eine koaxiale Einmittung zu erreichen.

Vorzugsweise ist die Auswerteelektronik 200 so ausgelegt, dass sie eine schwankende oder schwingende Last rechnerisch erkennt. Es kann somit ein Warnsignal oder ein optisches Signal angezeigt werden, um dem Bediener mitzuteilen, dass er abwarten sollte, bis das Schwanken oder Schwingen nachgelassen hat. Um ein Schwanken oder Schwingen zu erkennen, können z.B. aufeinanderfolgende Ausgangssignale a.1, a.2, a.3 miteinander verglichen werden. Falls diese Ausgangssignale a.1, a.2, a.3 voneinander abweichen, befindet sich die Vorrichtung 100 nicht in Ruhe und es sollte abgewartet werden. Es hat sich gezeigt, dass aufgrund der großen Gewichte, die hier bewegt werden, solche Schwankungen und Schwingungen schnell gedämpft werden.

Vorzugsweise wird auf dem Bildschirm 201 die erwähnte grafische Darstellung zur Zielführung einem Bild überlagert, das mit einer Kamera aufgenommen wird. Vorzugsweise sitzt diese Kamera oberhalb der Vorrichtung 100 (z.B. am Kran 20). Durch diese Art der Darstellung wird die Bedienbarkeit weiter vereinfacht, da der Bediener weitere visuelle Hinweise erhält, die ein schnelles und zielgerichtetes Einmitten ermöglichen.

Die Vorrichtung 100 kann auch, wie in Fig. 4 gezeigt, mit einem Schalter oder Taster 203 versehen sein, der wie ein Auslöser nur beim Betätigen eine Abstandsmessung durchführt. Dieser Schalter oder Taster 203 ist optional. Die Funktion dieses Schalters oder Tasters 203 kann auch über einen angeschlossenen Rechner erfolgen.

Es sind auch Ausführungsformen möglich, bei denen nur zwei Abstandssensoren zum Einsatz kommen. Dies ist dann möglich, wenn der Radius oder Durchmesser der rotationssymmetrischen Prüffläche des Präzisionsteils z.B. durch eine Werkstückzeichnung bekannt ist. Wenn man den Radius oder Durchmesser in die Auswerteelektronik/Auswertesoftware 200 der Abstandssensoren eingibt, dann ist die Vorrichtung 100 auch mit zwei Abstandssensoren ohne Einschränkung einsetzbar. Wenn nur zwei Abstandssensoren eingesetzt werden, dann beträgt der Winkel zwischen den beiden Abstandssensoren vorzugsweise 90 Grad.

Im Rahmen der vorliegenden Erfindung ist verschiedentlich von einem Drehtisch 130 zur Aufnahme eines Präzisionsteiles 11 die Rede. Es sei hier angemerkt, dass sich die Erfindung selbstverständlich auch auf Drehtische 130 anwenden lässt, die anders aufgebaut oder ausgeführt sind wie die beschriebenen und in den Figuren gezeigten Drehtische 130. Ein Drehtisch kann zum Beispiel mit Mitteln zu Einspannen oder Festspannen des Präzisionsteils ausgerüstet sein und/oder der Drehtisch kann eine strukturierte Oberfläche haben. Wichtig ist lediglich, dass der Drehtisch 130 zur zentrierten Aufnahme eines Präzisionsteiles 11 ausgelegt ist.

Falls sich beim Platzieren des Präzisionsteils kleiner Fehler ergeben, dann können diese durch die Messvorrichtung 100 kompensiert werden.

**Bezugszeichenliste**

| | |
|---|---|
| Messsystem | 10 |
| Präzisionsteil | 11 |
| | 12 |
| Untere Zentrierspitze | 13 |
| Drehtisch | 13.1 |
| obere Zentrierspitze | 14 |
| Arm | 14.1 |
| Doppelpfeile | 14.2 |
| Sensor(en) | 15 |
| Doppelpfeile | 15.1, 15.2, 15.3, 15.4 |
| Welle | 16 |
| Bohrung | 17 |
| | |
| Zuführvorrichtung | 20 |
| Ösen | 21 |
| Seile | 22 |
| Aufhängungspunkt | 23 |
| | |
| Vorrichtung | 100 |
| | |
| Maschinenbett | 120 |
| Abstandsensoren | 121.1, 121.2, 121.3 |
| gleichschenkliges Dreieck | 122 |
| Hilfskreis | 123 |
| Messachsen | 124.1, 124.2, 124.3 |
| | |
| Drehtisch | 130 |
| | |
| Arm | 140 |
| Messturm | 141 |
| Lateralschlitten | 142 |
| zweiter Lateralschlitten | 143 |
| | |
| Messtaster | 150 |
| Auswerteelektronik | 200 |
| Bildschirm | 201 |
| Ausgangsleitungen | 202.1, 202.2, 202.3 |
| Taster | 203 |
| | |
| vertikale Drehachse | A1 |
| vertikale Rotationsachse | A2 |
| Abstand | Ab1 |
| Effektiver Abstand | Ab1* |
| Abstandsvektoren | *̅a̅*̅1, *̅a̅*̅2, *̅a̅*̅3 |
| | |
| Ausgangssignale | a.1, a.2, a.3 |
| Abstände | a2 |
| Radius des Tellers | r1 |
| Radialabstand | r2 |
| Effektiver Radialabstand | r2* |
| Korrekturvektor | *̅k̅*̅2 |
| | |
| Laserstrahl | L |
| virtueller Messpunkt | MV |
| Winkel in x-z-Ebene | W1 |
| Neigungswinkel | W2 |
| x,y z | Koordinaten |

## Patentansprüche

1. Vorrichtung (100) mit einem Drehtisch (130) zur Aufnahme eines Präzisionsteiles (11), wobei der Drehtisch (130) eine zentrale, vertikale Drehachse (A1) aufweist, wobei die Vorrichtung (100) eine Auswerteelektronik (200) und berührungslos arbeitende Abstandsensoren (121.1, 121.2, 121.3) umfasst,
**dadurch gekennzeichnet, dass**
- es sich bei den Abstandsensoren (121.1, 121.2, 121.3) um mindestens zwei Abstandssensoren (121.1, 121.2, 121.3) handelt, die in einer vorbekannten geometrischen Konstellation zu der Drehachse (A1) angeordnet sind, deren Messachsen (124.1, 124.2, 124.3) so radial in Richtung der Drehachse (A1) unter einem Neigungswinkel (W2) gerichtet sind, dass sich die Messachsen (124.1, 124.2, 124.3) der Abstandsensoren (121.1, 121.2, 121.3) in einem virtuellen Messpunkt (MV) treffen, der auf der Drehachse (A1) liegt und die Messachsen (124.1, 124.2, 124.3) einen virtuellen Tastkegel bilden, dessen Tastspitze in diesem virtuellen Messpunkt (MV) liegt,
wobei die Messachsen (124.1, 124.2, 124.3) der mindestens zwei Abstandssensoren (121.1, 121.2, 121.3) in Richtung einer rotationssymmetrischen Fläche (16, 17) des Präzisionsteils (11) gerichtet sind, der in einer Position oberhalb des Drehtischs (130) schwebt,
- die Abstandsensoren (121.1, 121.2, 121.3) schaltungstechnisch mit der Auswerteelektronik (200) verbindbar sind,
- die Auswerteelektronik (200) konfiguriert ist, Ausgangssignale (a.1, a.2, a.3) der Abstandsensoren (121.1, 121.2, 121.3) zu verarbeiten, um eine Aussage über eine koaxiale Einmittung des oberhalb des Drehtischs (130) schwebendes Präzisionsteils (11) in Bezug auf die Drehachse (A1) zu ermöglichen
- die Auswerteelektronik (200) konfiguriert ist, ein Signal auszugeben, das eine Aussage über eine Istposition des Präzisionsteiles (11) in Bezug auf die Drehachse (A1) beim Platzieren ermöglicht.

2. Vorrichtung (100) nach Anspruch 1, **dadurch gekennzeichnet, dass** drei Abstandsensoren (121.1, 121.2, 121.3) zum Einsatz kommen und dass die geometrischen Konstellation der Abstandsensoren (121.1, 121.2, 121.3) so gewählt ist, dass die Abstandsensoren (121.1, 121.2, 121.3) in äquidistanten gegenseitigen Abständen (a2) um den Drehtisch (130) herum angeordnet sind.

3. Vorrichtung (100) nach Anspruch 2, **dadurch gekennzeichnet, dass** der Radialabstand (r2) aller Abstandsensoren (121.1, 121.2, 121.3) zu der Drehachse (A1) identisch ist und die Abstandsensoren (121.1, 121.2, 121.3) somit in einem gleichschenkligen Dreieck (122) angeordnet sind.

4. Vorrichtung (100) nach Anspruch 2 oder 3, **dadurch gekennzeichnet, dass** es sich bei den Abstandsensoren (121.1, 121.2, 121.3) um optische Abstandssensoren handelt.

5. Vorrichtung (100) nach Anspruch 2 oder 3, **dadurch gekennzeichnet, dass** es sich bei den Abstandsensoren (121.1, 121.2, 121.3) um Lasersensoren handelt, die mittels Laufzeitmessung einen Abstand zu dem Präzisionsteil (11) messen, wobei diese Abstandsensoren (121.1, 121.2, 121.3) Laserlicht entlang der Messachsen (124.1, 124.2, 124.3) auf eine rotationssymmetrische Oberfläche (16, 17) des Präzisionsteils (11) richten.

6. Vorrichtung (100) nach einem der vorhergehenden Ansprüche, **dadurch gekennzeichnet, dass** die Vorrichtung (100) einen Bildschirm (201) umfasst, auf dem ein schematisches Zielführungssystem, vorzugsweise in Form eines Fadenkreuzes, dargestellt ist, wobei die Darstellung auf dem Bildschirm (201) direkt oder indirekt anhand der Ausgangssignale (a.1, a.2, a.3) der Abstandsensoren (121.1, 121.2, 121.3) erfolgt.

7. Vorrichtung (100) nach einem der vorhergehenden Ansprüche, **dadurch gekennzeichnet, dass** es sich um eine Messvorrichtung (100) zum Vermessen eines Präzisionsteiles (11) oder um eine Bearbeitungsmaschine zum Bearbeiten eines Präzisionsteiles (11) handelt.

8. Verfahren zum Positionieren eines Präzisionsteiles (11) auf einem Drehtisch (130) einer Vorrichtung (100) mit den folgenden Schritten:
- Befestigen des Präzisionsteiles (11) an einem Hebezeug (20),
- Zuführen des Präzisionsteiles (11) mit dem Hebezeug (20) in eine Position, in der das Präzisionsteil (11) oberhalb des Drehtischs (130) schwebt,
- automatisches Ausführen einer berührungslosen Abstandsmessung mittels mindestens zwei Abstandsensoren (121.1, 121.2, 121.3), die in einer vorbekannten geometrischen Konstellation zu der Drehachse (A1) angeordnet sind, deren Messachsen (124.1, 124.2, 124.3) so radial in Richtung der Drehachse (A1) unter einem Neigungswinkel (W2) gerichtet sind, dass sich die Messachsen (124.1, 124.2, 124.3) der Abstandsensoren (121.1, 121.2, 121.3) in einem virtuellen Messpunkt (MV) treffen, der auf der Drehachse (A1) liegt und die Messachsen (124.1, 124.2, 124.3) einen virtuelle Tastkegel bilden, dessen Tastspitze in diesem virtuellen Messpunkt (MV) liegt, wobei die Messachsen (124.1, 124.2, 124.3) in Richtung einer rotationssymmetrischen Fläche (16, 17) des Präzisionsteiles (11) gerichtet sind,
- Auswerten von Ausgangssignalen (a.1, a.2, a.3) der Abstandsensoren (121.1, 121.2, 121.3), um eine Aussage über die koaxiale Einmittung des Präzisionsteiles (11) in Bezug auf eine Drehachse (A1) des Drehtischs (130) zu ermöglichen,
- Ausgabe eines Signals, das eine Aussage über eine Istposition des Präzisionsteiles (11) in Bezug auf die Drehachse (A1) ermöglicht,
- Steuern des Hebezeugs (20), um eine koaxiale Einmittung des Präzisionsteiles (11) in Bezug auf die Drehachse (A1) des Drehtischs (130) zu erreichen.

9. Verfahren nach Anspruch 8, **dadurch gekennzeichnet, dass**
- jeder der Abstandsensoren (121.1, 121.2, 121.3) Laserlicht in Richtung des Präzisionsteiles (11) aussendet und Laserlicht einfängt,
- dass das Laserlicht von einer rotationssymmetrischen Fläche (16, 17) des Präzisionsteiles (11) reflektiert wird, und
- dass anhand einer Laufzeitmessung der Abstand zwischen jedem Abstandsensor (121.1, 121.2, 121.3) und der rotationssymmetrischen Fläche (16, 17) ermittelt wird.

10. Verfahren nach Anspruch 8 oder 9, **dadurch gekennzeichnet, dass** die Ausgabe mittels visuellen Information erfolgt und ein Zielführungsgrafik auf einem Bildschirm (201) dargestellt wird, die eine Aussage über die Istposition des Präzisionsteiles (11) in Bezug auf die Drehachse (A1) ermöglicht.

11. Verfahren nach Anspruch 10, **dadurch gekennzeichnet, dass** der Zielführungsgrafik ein Bild überlagert wird, das von einer Kamera aufgenommen wurde.

## Claims

1. Apparatus (100), comprising a turntable (130) for accommodating a precision part (11), wherein the turntable (130) comprises a central, vertical rotary axis (A1), wherein the apparatus (100) comprises an electronic evaluation unit (200) and distance sensors (121.1, 121.2, 121.3) that operate in a contact-free manner,
**characterized in that**
- the distance sensors (121.1, 121.2, 121.3) concern at least two distance sensors (121.1, 121.2, 121.3) which are arranged in a previously known geometric constellation relative to the rotary axis (A1), whose measuring axes (124.1, 124.2, 124.3) are directed radially in the direction of the rotary axis (A1) under an angle of inclination (W2) in such a way that the measuring axes (124.1, 124.2, 124.3) of the distance sensors (121.1, 121.2, 121.3) meet in a virtual measuring point (MV) which lies on the measuring axis (A1), and the measuring axes (124.1, 124.2, 124.3) form a virtual scanning cone whose scanning tip lies in said virtual measuring point (MV), wherein the measuring axes (124.1, 124.2, 124.3) of the at least two distance sensors (121.1, 121.2, 121.3) are directed in the direction of a rotationally symmetrical surface (16, 17) of the precision part (11) which floats in a position above the turntable (130);
- the distance sensors (121.1, 121.2, 121.3) are connectible by circuitry to the electronic evaluation unit (200);
- the electronic evaluation unit (200) is configured to process the output signals (a.1, a.2, a.3) of the distance sensors (121.1, 121.2, 121.3) in order to enable a statement on a coaxial centering of the precision part (11) floating above the turntable (130) with respect to the rotary axis (A1);
- the electronic evaluation unit (200) is configured to output a signal which enables a statement on an actual position of the precision part (11) with respect to the rotary axis (A1) during positioning.

2. Apparatus (100) according to claim 1, **characterized in that** three distance sensors (121.1, 121.2, 121.3) are employed, and the geometric constellation of the distance sensors (121.1, 121.2, 121.3) is chosen in such a way that the distance sensors (121.1, 121.2, 121.3) are arranged in equidistant mutual distances (a2) around the turntable (130).

3. Apparatus (100) according to claim 2, **characterized in that** the radial distance (r2) of all distance sensors (121.1, 121.2, 121.3) from the rotary axis (A1) is identical and the distance sensors (121.1, 121.2, 121.3) are therefore arranged in an isosceles triangle (122).

4. Apparatus (100) according to claim 2 or 3, **characterized in that** the distance sensors (121.1, 121.2, 121.3) concern optical distance sensors.

5. Apparatus (100) according to claim 2 or 3, **characterized in that** the distance sensors (121.1, 121.2, 121.3) concern laser sensors which measure a distance from the precision part (11) by means of runtime measurement, wherein said distance sensors (121.1, 121.2, 121.3) direct laser light along the measuring axes (124.1, 124.2, 124.3) to a rotationally symmetrical surface (16, 17) of the precision part (11).

6. Apparatus (100) according to one of the preceding claims, **characterized in that** the apparatus (100) comprises a screen (201) which shows a schematic target guidance system, preferably in form of crosshairs, wherein the display on the screen (201) occurs directly or indirectly on the basis of the output signals (a.1, a.2, a.3) of the distance sensors (121.1, 121.2, 121.3).

7. Apparatus (100) according to one of the preceding claims, **characterized in that** it concerns a measuring apparatus (100) for measuring a precision part (11) or a machine tool for machining a precision part (11).

8. A method for positioning a precision part (11) on a turntable (130) of Apparatus (100), comprising the following steps:
- fixing the precision part (11) to a hoist (20);
- moving the precision part (11) with the hoist (20) to a position in which the precision part (11) floats above the turntable (130);
- automatic performance of a contact-free distance measurement by means of at least two distance sensors (121.1, 121.2, 121.3), which are arranged in a prior known geometric constellation relative to the rotary axis (A1), whose measuring axes (124.1, 124.2, 124.3) are directed radially in the direction of the rotary axis (A1) under an angle of inclination (W2) in such a way that the measuring axes (124.1, 124.2, 124.3) of the distance sensors (121.1, 121.2, 121.3) meet in a virtual measuring point (MV) which lies on the rotary axis (A1), and the measuring axes (124.1, 124.2, 124.3) form a virtual scanning cone whose scanning tip lies in said virtual measuring point (MV), wherein the measuring axes (124.1, 124.2, 124.3) are directed in the direction of a rotationally symmetrical surface (16, 17) of the precision part (11);
- evaluation of output signals (a.1, a.2, a.3) of the distance sensors (121.1, 121.2, 121.3) in order to enable a statement on the coaxial centering of the precision part (11) with respect to a rotary axis (A1) of the turntable (130);
- output of a signal which enables a statement on an actual position of the precision part (11) with respect to the rotary axis (A1);
- controlling the hoist (20) in order to achieve coaxial centering of the precision part (11) with respect to the rotary axis (A1) of the turntable (130).

9. Method according to claim 8, **characterized in that**
- each of the distance sensors (121.1, 121.2, 121.3) emits laser light in the direction of the precision part (11) and captures laser light;
- the laser light is reflected from a rotationally symmetrical surface (16, 17) of the precision part (11), and
- the distance between each distance sensor (121.1, 121.2, 121.3) and the rotationally symmetrical surface (16, 17) is determined by means of runtime measurement.

10. Method according to claim 8 or 9, **characterized in that** the output occurs by means of visual information and target guidance graphics are displayed on a screen (201) which allow a statement on the actual position of the precision part (11) with respect to the rotary axis (A1).

11. Method according to claim 10, **characterized in that** an image is superimposed on the target guidance graphics which was recorded by a camera.

## Revendications

1. Dispositif (100) comprenant un plateau tournant (130) destiné à recevoir un élément de précision (11), le plateau tournant (130) présentant un axe de rotation (A1) central vertical, et le dispositif (100) comprenant une électronique d'évaluation (200) et des détecteurs de distance (121.1, 121.2, 121.3) fonctionnant sans contact,
**caractérisé en ce que**
- il y a au moins deux détecteurs de distance (121.1, 121.2, 121.3) agencés dans une configuration géométrique prédéfinie par rapport à l'axe de rotation (A1), les axes de mesure (124.1, 124.2, 124.3) de ces derniers étant orientés radialement en direction de l'axe de rotation (A1) selon un angle d'inclinaison (W2) de telle sorte que les axes de mesure (124.1, 124.2, 124.3) des détecteurs de distance (121.1, 121.2, 121.3) se rencontrent en un point de mesure virtuel (MV) qui se situe sur l'axe de rotation (A1) et que les axes de mesure (124.1, 124.2, 124.3) forment un cône palpeur virtuel dont la pointe de contact repose sur ce point de mesure virtuel (MV), dans lequel les axes de mesure (124.1, 124.2, 124.3) des au moins deux détecteurs de distance (121.1, 121.2, 121.3) sont orientés en direction d'une surface à rotation symétrique (16, 17) de l'élément de précision (11), lequel élément étant suspendu dans une position au-dessus du plateau tournant (130),
- les détecteurs de distance (121.1, 121.2, 121.3) peuvent être raccordés par une technique de circuits à l'électronique d'évaluation (200),
- l'électronique d'évaluation (200) est configurée pour traiter des signaux de sortie (a.1, a.2, a.3) des détecteurs de distance (121.1, 121.2, 121.3) pour donner une indication sur un centrage coaxial de l'élément de précision (11) suspendu au-dessus du plateau tournant (130) par rapport à l'axe de rotation (A1),
- l'électronique d'évaluation (200) est configurée pour émettre un signal qui donne une indication, lors du positionnement, sur la position réelle de l'élément de précision (11) par rapport à l'axe de rotation (A1).

2. Dispositif (100) selon la revendication 1, **caractérisé en ce qu'**il est utilisé trois détecteurs de distance (121.1, 121.2, 121.3) et **en ce que** la configuration géométrique des détecteurs de distance (121.1, 121.2, 121.3) est choisie de telle sorte que les détecteurs de distance (121.1, 121.2, 121.3) sont agencés autour du plateau tournant (130) à distance égale (a2).

3. Dispositif (100) selon la revendication 2, **caractérisé en ce que** la distance radiale (r2) de tous les détecteurs de distance (121.1, 121.2, 121.3) par rapport à l'axe de rotation (A1) est identique et **en ce que** les détecteurs de distance (121.1, 121.2, 121.3) sont ainsi agencés en triangle équilatéral (122).

4. Dispositif (100) selon la revendication 2 ou 3, **caractérisé en ce que** les détecteurs de distance (121.1, 121.2, 121.3) sont des détecteurs de distance optiques.

5. Dispositif (100) selon la revendication 2 ou 3, **caractérisé en ce que** les détecteurs de distance (121.1, 121.2, 121.3) sont des détecteurs laser qui mesurent à l'aide d'un procédé de mesure du temps une distance par rapport à l'élément de précision (11), ces détecteurs de distance (121.1, 121.2, 121.3) dirigeant une lumière laser le long des axes de mesure (124.1, 124.2, 124.3) sur une surface à rotation symétrique (16, 17) de l'élément de précision (11).

6. Dispositif (100) selon l'une des revendications précédentes, **caractérisé en ce que** le dispositif (100) comprend un écran (201) sur lequel est représenté un système de guidage schématique, de préférence sous la forme d'un encroix, la représentation sur l'écran (201) se faisant directement ou indirectement en s'appuyant sur les signaux de sortie (a.1, a.2, a.3) des détecteurs de distance (121.1, 121.2, 121.3).

7. Dispositif (100) selon l'une des revendications précédentes, **caractérisé en ce qu'**il s'agit d'un dispositif de mesure (100) pour mesurer un élément de précision (11) ou bien d'une machine d'usinage pour usiner un élément de précision (11).

8. Procédé pour positionner un élément de précision (11) sur un plateau tournant (130) d'un dispositif (100) comprenant les étapes consistant à :
- fixer l'élément de précision (11) à un engin de levage (20),
- amener l'élément de précision (11) avec l'engin de levage (20) dans une position dans laquelle l'élément de précision (11) est suspendu au-dessus du plateau tournant (130),
- réaliser de manière automatique une mesure de distance sans contact à l'aide d'au moins deux détecteurs de distance (121.1, 121.2, 121.3) agencés dans une configuration géométrique prédéfinie par rapport à l'axe de rotation (A1), les axes de mesure de ces derniers (124.1, 124.2, 124.3) étant orientés radialement en direction de l'axe de rotation (A1) suivant un angle d'inclinaison (W2) de telle sorte que les axes de rotation (124.1, 124.2, 124.3) des détecteurs de distance (121.1, 121.2, 121.3) se rencontrent en un point de mesure virtuel (MV) qui se situe sur l'axe de rotation (A1) et que les axes de mesure (124.1, 124.2, 124.3) forment un cône palpeur virtuel dont la pointe de contact repose sur ce point de mesure virtuel (MV), les axes de mesure (124.1, 124.2, 124.3) étant orientés en direction d'une surface à rotation symétrique (16, 17) de l'élément de précision (11),
- interpréter les signaux de sortie (a.1, a.2, a.3) des détecteurs de distance (121.1, 121.2, 121.3) pour avoir une indication sur le centrage coaxial de l'élément de précision (11) par rapport à l'axe de rotation (A1) du plateau tournant (130),
- émettre un signal qui donne une indication sur la position réelle de l'élément de précision (11) par rapport à l'axe de rotation (A1),
- commander l'engin de levage (20) pour atteindre un centrage coaxial de l'élément de précision (11) par rapport à l'axe de rotation (A1) du plateau tournant (130).

9. Procédé selon la revendication 8, **caractérisé en ce que** :
- chacun des détecteurs de distance (121.1, 121.2, 121.3) émet une lumière laser en direction de l'élément de précision (11) et capture la lumière laser,
- la lumière laser est réfléchie depuis une surface à rotation symétrique (16, 17) de l'élément de précision (11), et **en ce que**
- grâce à une mesure du temps, on détermine la distance entre chaque détecteur de distance (121.1, 121.2, 121.3) et la surface à rotation symétrique (16, 17).

10. Procédé selon la revendication 8 ou 9, **caractérisé en ce que** la sortie s'effectue par le biais d'une information visuelle et **en ce qu'**un graphique de guidage est représenté sur un écran (201), lequel donne des indications sur la position réelle de l'élément de précision (11) par rapport à l'axe de rotation (A1).

11. Procédé selon la revendication 10, **caractérisé en ce que** le graphique de guidage vient se superposer à une image enregistrée par une caméra.
